# EUROPEAN PATENT SPECIFICATION

(11) **EP 2 831 385 B1**
(45) Date of publication and mention of the grant of the patent: **09.11.2016**
(21) Application number: 13714237.8
(22) Date of filing: 22.03.2013
(51) Int. Cl.: F01K 23/06, F01K 23/10, F02C 3/30, F01K 21/00, F02C 6/00, F01K 23/08

(54) **COMBINED CYCLE POWER PLANT AND METHOD FOR OPERATING SUCH A COMBINED CYCLE POWER PLANT**
KOMBIKRAFTWERK UND VERFAHREN ZUM BETRIEB SOLCH EINES KOMBIKRAFTWERKS
CENTRALE ÉLECTRIQUE À CYCLE COMBINÉ ET MÉTHODE D'EXPLOITATION D'UNE TELLE CENTRALE ÉLECTRIQUE À CYCLE COMBINÉ

(30) Priority: 28.03.2012 EP 12161898
(43) Date of publication of application: 04.02.2015
(73) Proprietor: General Electric Technology GmbH, 5400 Baden (CH)
(72) Inventor: LI, Hongtao, CH-5000 Aarau (CH); NUGROHO, Tjiptady, CH-5442 Fislisbach (CH); RUCHTI, Christoph, CH-8610 Uster (CH); PEDRETTI, Camille, CH-5430 Wettingen (CH)
(74) Representative: General Electric Technology GmbH
(86) International application number: PCT/EP2013/056055
(87) International publication number: WO 2013/144006

(56) References cited:
- US-A- 4 509 324
- US-A- 5 495 709
- US-A- 6 003 298
- US-A1- 2005 076 645
- US-A1- 2006 248 896

## Description

### BACKGROUND OF THE INVENTION

The present invention relates to thermal power plants. It refers to a combined cycle power plant according to the preamble of claim 1. It further refers to a method for operating such a combine cycle power plant.

### PRIOR ART

Grids in some regions need rather large power reserve from combined cycle power plants (CCPPs) at a level of up to 10% of the plant's net power output, or even higher.

In the prior art, this large amount of power reserve is normally achieved by designing the CCPP with large supplementary firing (SF) within the heat recovery steam generator HRSG of the plant (for the general idea of supplementary firing in CCPPs see for example documents US 3,879,616 or WO 2010/072729 A2). The supplementary firing will lead to the following two consequences:
1) Because a pressure margin has to be preserved for supplementary firing, the base load and part load steam turbine live steam pressure with SF being off will be lower than the allowed operating pressure. The larger the SF, the lower the live steam pressure and plant performance when SF is off.
   As an example, for a triple pressure reheat CCPP with about 500MW power output, considering 10% net power output to be provided by supplementary firing as power reserve, the requested live steam pressure design margin may result in a substantial drop of live steam pressure at base load and correspondingly to a plant performance drop (can be up to 0.5%).
2) Due to steam turbine live steam pressure operating range and HRSG supplementary firing design limit, solely relying on supplementary firing with reduced base load steam turbine live steam pressure may not be able to provide sufficient power reserve without a change in configuration of the steam turbine ST and the HRSG, e.g. switching from 3p (p= pressure) design to 2p or 1 p design. This will lead to a further plant performance drop when SF is off.

Document US 5,495,709 A discloses an air reservoir turbine installation having a gas turbine group connected to a compressed air reservoir, and comprising a hot water reservoir, a waste heat steam generator connected to receive an exhaust gas flow downstream of the gas turbine, the gas turbine group comprising a compressor unit, at least one combustion chamber and at least one turbine, wherein the waste heat steam generator is connected to introduce steam into the gas turbine group for increasing an output of the at least one turbine, and further comprising at least one heat exchanger to cool working air compressed by the compressor unit and a partial pressure evaporator to introduce water vapor into the working air, the at least one heat exchanger being connected to deliver heated water to the partial pressure evaporator.

Document US 4,509,324 A discloses a shipboard engine system and method of operating includes two compressors with an intercooler, a compressor turbine, a power turbine, a combustor for combining fuel, air and water. Heat exchangers remove heat from the exhaust and use it to preheat the water to the combustor. Spray condensers recover water from the exhaust for reuse. Water purification apparatus is used to remove acid from the water. The system is designed for stoichiometric operation at full load and run with increased efficiency at part load to give a total lower fuel consumption.

Document US 2006/248896 A1 discloses a method of operating a gas turbine power plant comprising of a first gas turbine group, consisting of a compressor and a turbine which are connected mechanically with one another, and a second gas turbine group, including a combustion device, which is placed in the gas flow stream between the first group's compressor and turbine, whereby the second gas turbine group consists of a compressor, a fuel injection device, a combustion chamber and a turbine, whereby the second gas turbine group's compressor and turbine are mechanically coupled to one another and at least one of the gas turbine groups having a device for the extraction of work, whereby the fact that a first flow of water and/or steam is heated with heat from the flue gas from the first group's turbine; that further amounts of water and/or steam are heated with heat from a gas stream that is compressed by the first group's compressor, and the produced water and/or steam is injected into the gas stream in such amounts that at least 60% of the oxygen content of the air in the stream is consumed through combustion in the combustion device, and in that the combustion gas that is fed into the turbine of the second gas turbine group has a pressure in the range 50-300 bar.

### SUMMARY OF THE INVENTION

It is an object of the present invention to have a combined cycle power plant, which provides a large power reserve at improved and optimized design performance when the plant is being operated at base load.

It is another object of the invention to provide a method for operating such a combined cycle power plant.

These and other objects are obtained by a combined cycle power plant according to claim 1 and an operating method according to claim 6.

According to the invention, a combined cycle power plant comprises a gas turbine the exhaust gas outlet of which is connected to a heat recovery steam generator, which is part of a water/steam cycle comprising a steam turbine, whereby, for having a large power reserve and at the same time a higher design performance when operated at base load, the gas turbine is designed with a steam injection capability for power augmentation, whereby the gas turbine comprises at least one combustor, and a compressor that provides cooling air for cooling said gas turbine, which is extracted from the compressor and cooled down in at least one cooling air cooler, and the steam for steam injection is generated in said cooling air cooler, whereby said steam can be injected into an air side inlet or outlet of said cooling air cooler and/or directly into said at least one combustor. The heat recovery steam generator is equipped with a supplementary firing. The supplementary firing is at least a single stage supplementary firing to increase the high-pressure steam production and providing augmentation power as power reserve to a grid when required.

According to an embodiment of the invention the at least one cooling air cooler is a once-through cooler (OTC).

According to another embodiment of the invention additional steam for steam injection is taken from said heat recovery steam generator.

According to another embodiment of the invention the supplementary firing is a two stage supplementary firing with a first stage for increasing the high pressure live steam production and providing augmentation power as power reserve to a grid, and a second stage arranged after a high pressure evaporator within the heat recovery steam generator for increasing intermediate pressure live steam production and providing additional power as power reserve to the grid when required.

According to a further embodiment of the invention a high-pressure steam turbine module is connected to the steam turbine by means of an automatic clutch.

A first method for operating a combined cycle power plant according to the invention is characterized in that in case of the need for power reserve the plant power is in a first step increased by means of steam injection into the gas turbine, and in the second step, the power of the steam turbine is augmented by means of increasing the load of the supplementary firing.

Especially, when a high-pressure steam turbine module is connected to the steam turbine by means of an automatic clutch, the method comprises the following steps:
a) to provide fast power augmentation, the high-pressure steam turbine module, which is disconnected from the steam turbine, is warmed up by bleed steam from the steam turbine or from the heat recovery steam generator, to keep the steam turbine warm;
b) when power reserve is needed, steam is injected into the gas turbine and the supplementary firing is started, whereby
   a. plant power is firstly increased with steam injection, and
   b. then steam turbine power is augmented with a supplementary firing load increase;
c) the high-pressure steam turbine module is started; and
d) before the steam turbine live steam operating pressure reaches a predetermined limit during supplementary firing loading, the high-pressure steam turbine module is ready for synchronization and connected by operating the automatic clutch.

Alternatively, the method comprises the following steps:
a) when a scheduled larger amount of power augmentation is needed, then, before power reserve is needed, the steam turbine is warmed up by steam admission to the high-pressure steam turbine module;
b) when power reserve is needed, steam is injected into the gas turbine and the supplementary firing is started, whereby
   a. plant power is firstly increased with steam injection, and
   b. then steam turbine power is augmented with a supplementary firing load increase;
c) the high-pressure steam turbine module is started; and
d) before the steam turbine live steam operating pressure reaches a predetermined limit during supplementary firing loading, the high-pressure steam turbine module is ready for synchronization and connected by operating the automatic clutch.

### BRIEF DESCRIPTION OF THE DRAWINGS

The present invention is now to be explained more closely by means of different embodiments and with reference to the attached drawings.
- Fig. 1: shows a simplified diagram of a combined cycle power plant according to a first embodiment of the invention with supplementary firing in the HRSG and steam injection by means of OTCs into the gas turbine;
- Fig. 2: shows a simplified diagram of a combined cycle power plant according to a second embodiment of the invention with supplementary firing in the HRSG and steam injection from the HRSG directly into the combustor of the gas turbine;
- Fig. 3: shows a simplified diagram of a combined cycle power plant according to a third embodiment of the invention with supplementary firing in the HRSG and steam injection by means of OTCs and from the HRSG into the gas turbine; and
- Fig. 4: shows a simplified diagram of a combined cycle power plant according to a fourth embodiment of the invention similar to Fig. 1 and 3, with an additional high pressure steam turbine module being connected by means of an automatic clutch.

### DETAILED DESCRIPTION OF DIFFERENT EMBODIMENTS OF THE INVENTION

The invention is essentially to combine in a CCPP gas turbine steam injection and HRSG single or two-stage supplementary firing to improve the plant's performance when the supplementary firing SF is off, and to increase the capability of power reserve when needed.

Using directly steam generated from once through cooler (OTC) for steam injection has benefits in form of a design simplification compared to steam extraction from HRSG.

A separated 2nd high-pressure steam turbine will further increase the plant's performance and power reserve capability.

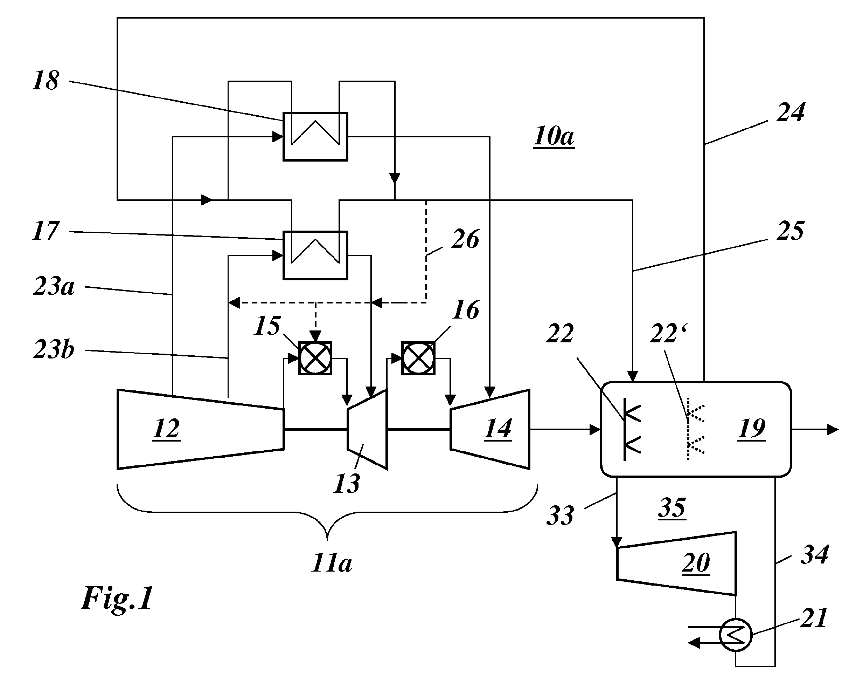

As shown in Fig. 1, a combined cycle power plant (CCPP) 10a has a gas turbine 11 a with a compressor 12, two combustors 15 and 16, and two turbines 13 and 14, designed with steam injection for power augmentation through steam line 26 using steam generated from cooling air coolers such as once-through coolers 17 and 18. The steam can be injected into an air side inlet our air side outlet of said air cooler 17 and/or directly into the combustor 15 (see Fig.1).

A steam injection to the hot air side (= air side inlet) of the cooling air cooler has the benefit of avoiding water droplets, which have happened when injecting the steam to the cold air side (= air side outlet) of the cooling air cooler. Such a steam injection to the hot air side of the cooling air cooler for gas turbine power augmentation (not necessarily combined with supplementary firing) is a preferred embodiment.

The gas turbine 11 a is cooled with cooling air from the compressor 12 through cooling air lines 23a and 23b. A heat recovery steam generator (HRSG) 19, which is part of a water/steam cycle 35 comprising a steam turbine 20 and a condenser 21 as well as a high pressure live steam line 33 and a feed water line 34, is designed with a single stage supplementary firing 22 to increase the high pressure steam production and providing augmentation power as power reserve to a grid when required.

Alternatively, a HRSG design with two stage supplementary firing 22 and 22' may be used: one firing stage 22 for increasing the high pressure live steam production and providing augmentation power as power reserve to the grid when required, and another inter-stage supplementary firing 22' after the high pressure evaporator within the HRSG for increasing the intermediate pressure live steam production and providing additional augmentation power as power reserve to the grid when required.

Augmentation air or oxygen for the 2nd SF 22' may be required to allow sufficient 02 over the section area of the 2nd SF. One of the possibilities is to preheat augmentation air with feed water, exhaust gas, cogeneration return water, CCS return condensate, or other sources to improve the efficiency.

As the steam from the cooling air coolers (OTCs 17 and 18) is partially or totally used for gas turbine steam injection at gas turbine 11 a, for a given percentage of power reserve, e.g. 10% of plant net base load power output, a higher live steam pressure when SF is off could be utilized and the plant performance will be improved.

On the other hand, it allows a large power reserve if needed. When an even larger power reserve is required, and the live steam pressure, when SF is on, is reaching the limit, the two-stage SF design (22 and 22') can provide additional power reserve. Optimizing HP and IP steam pressure margin for a given power reserve percentage can on the other hand improve the plant's performance at base load without power augmentation.

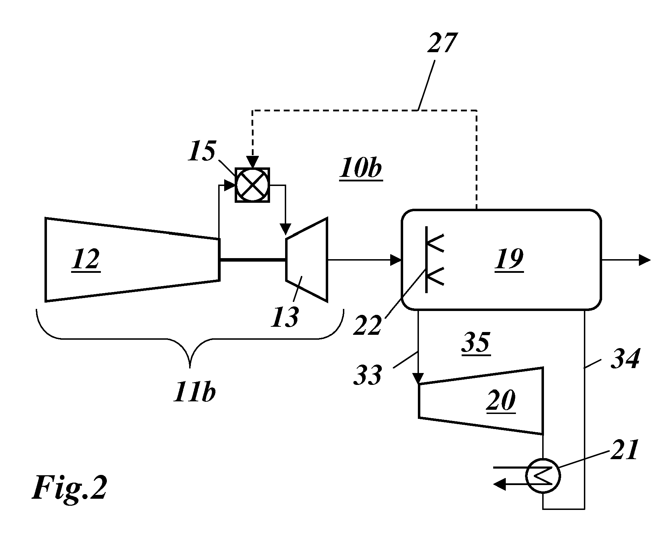

As shown in Fig. 2, a CCPP 10b has a gas turbine 11 b designed with steam injection at the combustor 15 for power augmentation using steam from the heat recovery steam generator (HRSG) 19. Again, a HRSG design with single stage supplementary firing 22 may be used to increase the high-pressure steam production and provide augmentation power as power reserve to the grid when required.

Again, a HRSG design with two stage supplementary firing 22 and 22' may be used as an alternative: one (22) for increasing the high pressure live steam production and providing augmentation power as power reserve to the grid when required, and another 2nd supplementary firing (22') after high pressure evaporator for increasing the intermediate pressure live steam production and providing additional augmentation power as power reserve to the grid when required.

Again, augmentation air or oxygen for the 2nd may be required to allow sufficient 02 over the section area of the 2nd SF. Augmentation air can be preheated with feed water, exhaust gas, cogeneration return water, CCS return condensate, or other sources to improve the efficiency.

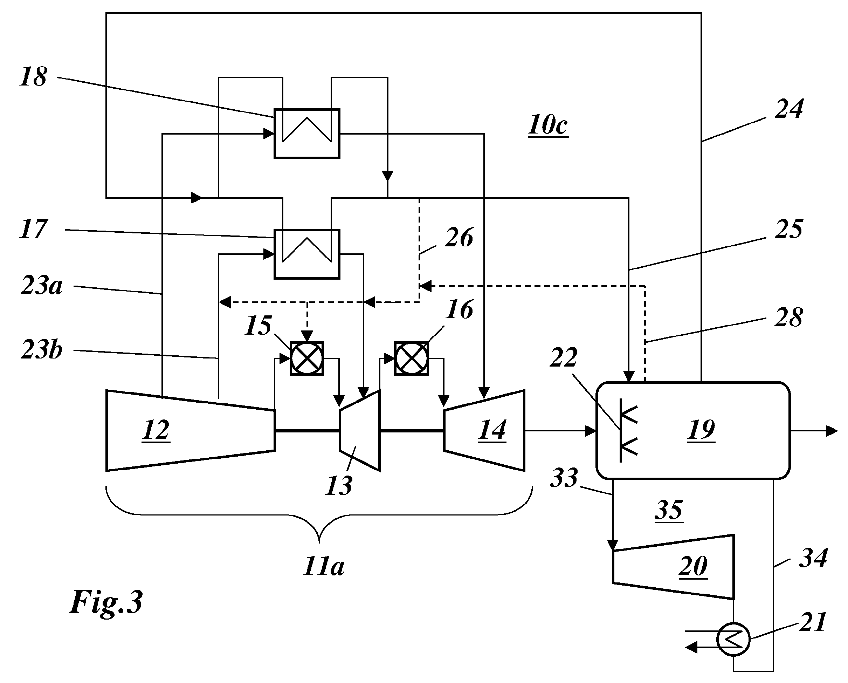

As shown in Fig. 3, a CCPP 10c according to another embodiment of the invention is similar to Fig. 1. The steam for power augmentation can be injected into the Cooling Air Cooler's (17, 18) air side outlet or inlet, or directly into the combustor 15. In addition, steam can be used from heat recovery steam generator (HRSG) 19 through steam line 28. The HRSG design is the same as in Fig. 1.

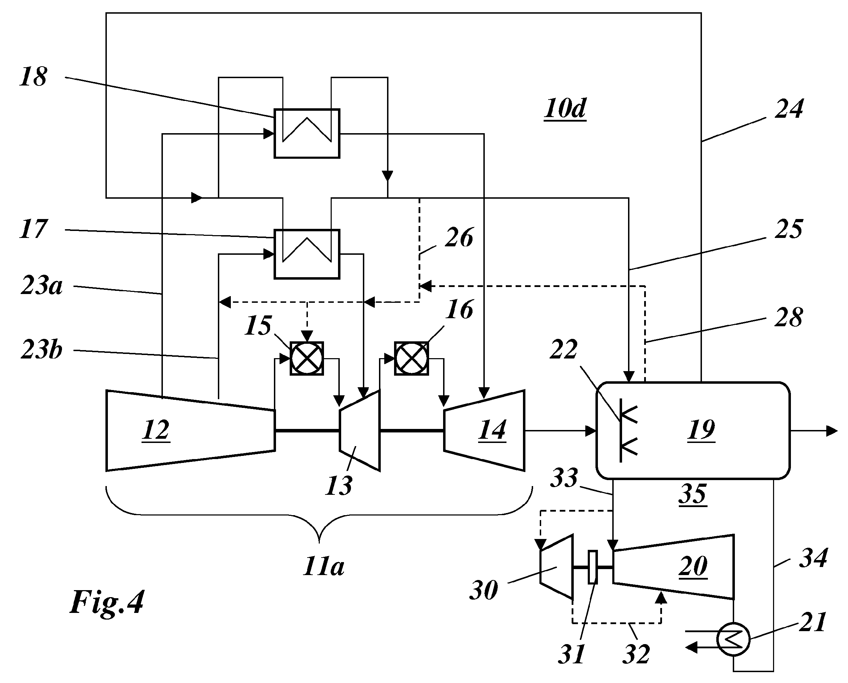

As shown in Fig. 4, a CCPP 10d similar to Fig. 1 and 3 further comprises a (second) high pressure steam turbine module 30 connected to the (first) steam turbine 20 by means of an automatic clutch 31 (such as a SSS clutch) and a steam line 32.

For each embodiment of Figs. 1 to 4 the method of operation is as follows:
- When power reserve is needed, the gas turbine steam injection and supplementary firing SF will start;
- Plant power will firstly increase with steam injection;
- Then steam turbine power is augmented with supplementary firing load increase.

For a CCPP 10d according to Fig. 4 the operation steps are:
- When a large amount power augmentation is needed, then before power reserve is needed, the steam admission to the 2nd high pressure steam turbine 30 starts to warm up the steam turbine 20;
- When power reserve is needed, gas turbine steam injection and SF will start;
- Plant power will firstly increase with steam injection;
- Then steam turbine power is augmented with supplementary firing load increase;
- The 2nd steam turbine high pressure module 30 will start;
- Before the steam turbine live steam operating pressure reaching the limit during supplementary firing loading, the 2nd steam turbine 30 shall be ready for synchronization and the SSS clutch 31 starts to engage.

For a CCPP 10d according to Fig. 4, further operation step includes:
- The separated steam turbine module is warmed up by bleed steam from the main steam turbine or from HRSG, to keep the steam turbine warm to be able to fast startup.

### LIST OF REFERENCE NUMERALS

- 10a-d: combined cycle power plant (CCPP)
- 11 a,b: gas turbine
- 12: compressor
- 13,14: turbine
- 15,16: combustor
- 17,18: once through cooler (OTC)
- 19: heat recovery steam generator (HRSG)
- 20,30: steam turbine
- 21: condenser
- 22,22': supplementary firing (SF)
- 23a,b: cooling air line
- 24: feed water line
- 25-28,32: steam line
- 30: high pressure steam turbine module
- 31: clutch (automatic)
- 33: high-pressure live steam line
- 34: feed water line
- 35: water/steam cycle

## Claims

1. Combined cycle power plant (10a-d) comprising a gas turbine (11 a,b) the exhaust gas outlet of which is connected to a heat recovery steam generator (19), which is part of a water/steam cycle (35) comprising a steam turbine (20), whereby, for having a large power reserve and at the same time a higher design performance when operated at base load, the gas turbine (11 a,b) is designed with a steam injection capability (26, 27) for power augmentation, whereby the gas turbine (11 a) comprises at least one combustor (15, 16), and a compressor (12) for providing cooling air for said gas turbine (11 a,b), which is extracted from the compressor (12) and cooled down in at least one cooling air cooler (17, 18), and the steam for steam injection is generated in said cooling air cooler (17, 18), whereby said steam is injected into an air side inlet or outlet of said cooling air cooler (17, 18) and/or directly into said at least one combustor (15, 16), **characterized in that** the heat recovery steam generator (19) is equipped with a supplementary firing (22, 22'), wherein the supplementary firing is at least a single stage supplementary firing (22) to increase the high pressure steam production and providing augmentation power as power reserve to a grid when required.

2. Combined cycle power plant according to claim 1, **characterized in that** the at least one cooling air cooler (17, 18) is a once-through cooler (OTC).

3. Combined cycle power plant according to claim 1 or 2, **characterized in that** additional steam for steam injection is taken from said heat recovery steam generator (19).

4. Combined cycle power plant according to claim 1, **characterized in that** the supplementary firing is a two stage supplementary firing (22, 22') with a first stage (22) for increasing the high pressure live steam production and providing augmentation power as power reserve to a grid, and a second stage (22') arranged after a high pressure evaporator within the heat recovery steam generator (19) for increasing intermediate pressure live steam production and providing additional power as power reserve to the grid when required.

5. Combined cycle power plant according to one of the claims 1 to 4, **characterized in that** an additional high-pressure steam turbine module (30) is connected to the steam turbine (20) by means of an automatic clutch (31).

6. Method for operating a combined cycle power plant according to one of the claims 1 to 5, **characterized in that** in case of the need for power reserve the plant power is in a first step increased by means of steam injection into the gas turbine (11 a,b), and in the second step, the power of the steam turbine (20) is augmented by means of increasing the load of the supplementary firing (22, 22').

7. Method according to claim 6 for operating a combined cycle power plant according to claim 5, comprising the following steps:
a) to provide fast power augmentation, the high-pressure steam turbine module (30), which is disconnected from the steam turbine (20), is warmed up by bleed steam from the steam turbine (20) or from the heat recovery steam generator (19), to keep the steam turbine warm;
b) when power reserve is needed, steam is injected into the gas turbine and the supplementary firing is started, whereby
a. plant power is firstly increased with steam injection, and
b. then steam turbine power is augmented with a supplementary firing load increase;
c) the additional high-pressure steam turbine module (30) is started; and
d) before the steam turbine live steam operating pressure reaches a predetermined limit during supplementary firing loading, the high-pressure steam turbine module (30) is ready for synchronization and connected by operating the automatic clutch (31).

8. Method according to claim 7 for operating a combined cycle power plant according to claim 5, comprising the following steps:
a) when a scheduled larger amount of power augmentation is needed, then, before power reserve is needed, the steam turbine is warmed up by steam admission to the additional high-pressure steam turbine module (30);
b) when power reserve is needed, steam is injected into the gas turbine (11 a) and the supplementary firing (22) is started, whereby
a. plant power is firstly increased with steam injection, and
b. then steam turbine power is augmented with a supplementary firing load increase;
c) the high-pressure steam turbine module (30) is started; and
d) before the steam turbine live steam operating pressure reaches a predetermined limit during supplementary firing loading, the additional high-pressure steam turbine module (30) is ready for synchronization and connected by operating the automatic clutch (31).

## Patentansprüche

1. Kombikraftwerk (10a-d), das eine Gasturbine (11a, b) umfasst, deren Abgasauslass mit einem Abhitzedampferzeuger (19) verbunden ist, der Teil eines Wasser/Dampf-Zyklus (35) ist, der eine Dampfturbine (20) umfasst,
wobei die Gasturbine (11a, b) mit einer Dampfeinleitungsfähigkeit (26, 27) zur Leistungserhöhung ausgelegt ist, um eine große Leistungsreserve und gleichzeitig eine höhere Entwurfsleistung aufzuweisen, wenn sie bei einer Grundlast betrieben wird, wobei die Gasturbine (11a) mindestens eine Brennkammer (15, 16) und einen Kompressor (12) zum Bereitstellen von Kühlluft, die dem Kompressor (12) entzogen wird und in mindestens einem Kühlluftkühler (17, 18) heruntergekühlt wird, für die Gasturbine (11a, b) umfasst, und der Dampf für die Dampfeinleitung in dem Kühlluftkühler (17, 18) erzeugt wird, wobei der Dampf in einem luftseitigen Einlass oder Auslass des Kühlluftkühlers (17, 18) und/oder unmittelbar in die mindestens eine Brennkammer (15, 16) eingeleitet wird, **dadurch gekennzeichnet, dass** der Abhitzedampferzeuger (19) mit einer Zusatzfeuerung (22, 22') ausgerüstet ist, wobei die Zusatzfeuerung zumindest eine einstufige Zusatzfeuerung (22) ist, um die Hochdruckdampferzeugung zu erhöhen und einem Netz eine Leistungserhöhung als Leistungsreserve zur Verfügung zu stellen, wenn es erforderlich ist.

2. Kombikraftwerk nach Anspruch 1, **dadurch gekennzeichnet, dass** der mindestens eine Kühlluftkühler (17, 18) ein Durchlaufkühler (OTC) ist.

3. Kombikraftwerk nach Anspruch 1 oder 2, **dadurch gekennzeichnet, dass** zusätzlicher Dampf zur Dampfeinleitung aus dem Abhitzedampferzeuger (19) entnommen wird.

4. Kombikraftwerk nach Anspruch 1, **dadurch gekennzeichnet, dass** die Zusatzfeuerung eine zweistufige Zusatzfeuerung (22, 22') mit einer ersten Stufe (22), um die Hochdruckfrischdampferzeugung zu erhöhen und um einem Netz eine Leistungserhöhung als Leistungsreserve zur Verfügung zu stellen, und mit einer zweiten Stufe (22') ist, die innerhalb des Abhitzedampferzeugers (19) hinter einem Hochdruckverdampfer angeordnet ist, um eine Mitteldruckfrischdampferzeugung zu erhöhen und dem Netz eine zusätzliche Leistung als Leistungsreserve zur Verfügung zu stellen, wenn es erforderlich ist.

5. Kombikraftwerk nach einem der Ansprüche 1 bis 4, **dadurch gekennzeichnet, dass** ein zusätzliches Hochdruckdampfturbinenmodul (30) mittels einer automatischen Kupplung (31) mit der Dampfturbine (20) verbunden ist.

6. Verfahren zum Betreiben eines Kombikraftwerks nach einem der Ansprüche 1 bis 5, **dadurch gekennzeichnet, dass** in dem Fall, in dem eine Leistungsreserve benötigt wird, die Kraftwerksleistung in einem ersten Schritt mittels Dampfeinleitung in die Gasturbine (11a, b) erhöht wird, und in dem zweiten Schritt die Leistung der Dampfturbine (20) mittels einer Erhöhung der Last der Zusatzfeuerung (22, 22') erhöht wird.

7. Verfahren nach Anspruch 6 zum Betreiben eines Kombikraftwerks nach Anspruch 5, das die folgenden Schritte umfasst:
a) um schnelle Leistungserhöhung bereitzustellen, wird das Hochdruckdampfturbinenmodul (30), das von der Dampfturbine (20) getrennt ist, durch Abzapfen von Dampf aus der Dampfturbine (20) oder aus dem Abhitzedampferzeuger (19) aufgewärmt, um die Dampfturbine warm zu halten;
b) dann, wenn die Leistungsreserve benötigt wird, wird Dampf in die Gasturbine eingeleitet und die Zusatzfeuerung wird gestartet, wobei
a. die Kraftwerksleistung zunächst mit Dampfeinleitung erhöht wird, und
b. die Dampfturbinenleistung anschließend mit einer Lasterhöhung der Zusatzfeuerung erhöht wird;
c) das zusätzliche Hochdruckdampfturbinenmodul (30) wird gestartet; und
d) bevor der Dampfturbinenfrischdampfbetriebsdruck während des Ladens der Zusatzfeuerung einen vorgegebenen Grenzwert erreicht, ist das Hochdruckdampfturbinenmodul (30) bereit zur Synchronisation und wird durch das Betreiben der automatischen Kupplung (31) verbunden.

8. Verfahren nach Anspruch 7 zum Betreiben eines Kombikraftwerks nach Anspruch 5, das die folgenden Schritte umfasst:
a) die Dampfturbine wird dann, wenn ein geplanter größerer Betrag der Leistungserhöhung benötigt wird, bevor die Leistungsreserve benötigt wird, durch Dampfeinlass in das zusätzliche Hochdruckdampfturbinenmodul (30) aufgewärmt;
b) Dampf wird in die Gasturbine (11a) eingeleitet und die Zusatzfeuerung (22) wird gestartet, wenn die Leistungsreserve benötigt wird, wobei
a. die Kraftwerksleistung zunächst mit Dampfeinleitung erhöht wird, und
b. die Dampfturbinenleistung anschließend mit einer Lasterhöhung der Zusatzfeuerung erhöht wird;
c) das Hochdruckdampfturbinenmodul (30) wird gestartet; und
d) bevor der Dampfturbinenfrischdampfbetriebsdruck während des Ladens der Zusatzfeuerung einen vorgegebenen Grenzwert erreicht, ist das zusätzliche Hochdruckdampfturbinenmodul (30) bereit zur Synchronisation und wird durch das Betreiben der automatischen Kupplung (31) verbunden.

## Revendications

1. Centrale électrique (10a-d) à cycle combiné comportant une turbine (11a, b) à gaz dont la sortie de gaz d'échappement est reliée à un générateur (19) de vapeur à récupération de chaleur qui fait partie d'un cycle eau/vapeur (35) comportant une turbine (20) à vapeur, la turbine (11a, b) à gaz, pour disposer d'une importante réserve de puissance et en même temps de performances nominales plus élevées lorsqu'elle est exploitée à la charge de base, étant conçue avec une fonctionnalité (26, 27) d'injection de vapeur en vue d'un appoint de puissance, la turbine (11a) à gaz comportant au moins une chambre (15, 16) de combustion, et un compresseur (12) servant à fournir de l'air de refroidissement destiné à ladite turbine (11a, b) à gaz, qui est extrait du compresseur (12) et refroidi dans au moins un refroidisseur (17, 18) d'air de refroidissement, et la vapeur destinée à l'injection de vapeur étant générée dans ledit refroidisseur (17, 18) d'air de refroidissement, ladite vapeur étant injectée dans une entrée ou une sortie côté air dudit refroidisseur (17, 18) d'air de refroidissement et/ou directement dans ladite ou lesdites chambres (15, 16) de combustion, **caractérisée en ce que** le générateur (19) de vapeur à récupération de chaleur est équipé d'une chauffe complémentaire (22, 22'), la chauffe complémentaire étant au moins une chauffe complémentaire (22) à un seul étage servant à augmenter la production de vapeur à haute pression et à fournir une puissance d'appoint en tant que réserve de puissance à un réseau électrique lorsque c'est nécessaire.

2. Centrale électrique à cycle combiné selon la revendication 1, **caractérisée en ce que** le ou les refroidisseurs (17, 18) d'air de refroidissement sont des refroidisseurs à passage unique (OTC).

3. Centrale électrique à cycle combiné selon la revendication 1 ou 2, **caractérisée en ce que** de la vapeur supplémentaire destinée à l'injection de vapeur est prélevée à partir dudit générateur (19) de vapeur à récupération de chaleur.

4. Centrale électrique à cycle combiné selon la revendication 1, **caractérisée en ce que** la chauffe complémentaire est une chauffe complémentaire à deux étages (22, 22') dotée d'un premier étage (22) servant à augmenter la production de vapeur vive à haute pression et à fournir une puissance d'appoint en tant que réserve de puissance à un réseau électrique, et d'un deuxième étage (22') disposé après un évaporateur à haute pression à l'intérieur du générateur (19) de vapeur à récupération de chaleur pour augmenter la production de vapeur vive à pression intermédiaire et fournir une puissance supplémentaire en tant que réserve de puissance au réseau électrique lorsque c'est nécessaire.

5. Centrale électrique à cycle combiné selon l'une des revendications 1 à 4, **caractérisée en ce qu'**un module supplémentaire (30) de turbine à vapeur à haute pression est relié à la turbine (20) à vapeur au moyen d'un embrayage automatique (31).

6. Procédé d'exploitation d'une centrale électrique à cycle combiné selon l'une des revendications 1 à 5, **caractérisé en ce qu'**en cas de besoin de la réserve de puissance, la puissance de la centrale est, lors d'une première étape, augmentée au moyen d'une injection de vapeur dans la turbine (11a, b) à gaz, et lors de la deuxième étape, la puissance de la turbine (20) à vapeur est accrue au moyen d'une augmentation de la charge de la chauffe complémentaire (22, 22').

7. Procédé selon la revendication 6 pour l'exploitation d'une centrale électrique à cycle combiné selon la revendication 5, comportant les étapes suivantes :
a) pour apporter un appoint rapide de puissance, le module (30) de turbine à vapeur à haute pression, qui est déconnecté de la turbine (20) à vapeur, est réchauffé par de la vapeur de soutirage provenant de la turbine (20) à vapeur ou du générateur (19) de vapeur à récupération de chaleur, pour maintenir chaude la turbine à vapeur ;
b) lorsqu'une réserve de puissance est nécessaire, de la vapeur est injectée dans la turbine à gaz et la chauffe complémentaire est démarrée,
a. la puissance de la centrale étant d'abord augmentée par l'injection de vapeur,
b. puis la puissance de la turbine à vapeur étant accrue au moyen d'une augmentation de la charge de la chauffe complémentaire ;
c) le module supplémentaire (30) de turbine à vapeur à haute pression est démarré ; et
d) avant que la pression de vapeur vive d'exploitation de la turbine à vapeur n'atteigne une limite prédéterminée pendant le chargement de la chauffe complémentaire, le module (30) de turbine à vapeur à haute pression est prêt à la synchronisation et connecté en actionnant l'embrayage automatique (31).

8. Procédé selon la revendication 7 pour l'exploitation d'une centrale électrique à cycle combiné selon la revendication 5, comportant les étapes suivantes :
a) lorsqu'une plus grande quantité planifiée d'appoint de puissance est nécessaire, alors, avant que la réserve de puissance ne soit nécessaire, la turbine à vapeur est réchauffée par admission de vapeur dans le module supplémentaire (30) de turbine à vapeur à haute pression ;
b) lorsqu'une réserve de puissance est nécessaire, de la vapeur est injectée dans la turbine (11a) à gaz et la chauffe complémentaire (22) est démarrée,
a. la puissance de la centrale étant d'abord augmentée par l'injection de vapeur,
b. puis la puissance de la turbine à vapeur étant accrue au moyen d'une augmentation de la charge de la chauffe complémentaire ;
c) le module (30) de turbine à vapeur à haute pression est démarré ; et
d) avant que la pression de vapeur vive d'exploitation de la turbine à vapeur n'atteigne une limite prédéterminée pendant le chargement de la chauffe complémentaire, le module supplémentaire (30) de turbine à vapeur à haute pression est prêt à la synchronisation et connecté en actionnant l'embrayage automatique (31).
